(19) **Europäisches Patentamt / European Patent Office / Office européen des brevets**

(11) **EP 4 145 012 A1**

(12) **EUROPEAN PATENT APPLICATION**

(43) Date of publication:
08.03.2023 Bulletin 2023/10

(21) Application number: 21194434.3

(22) Date of filing: 01.09.2021

(51) International Patent Classification (IPC):
$F16F\ 7/10$ (2006.01)     $E04H\ 9/02$ (2006.01)
$E04B\ 1/98$ (2006.01)

(52) Cooperative Patent Classification (CPC):
F16F 7/10; E04B 1/98; E04H 9/0215

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Tophøj & Grathwol ApS
4600 Køge (DK)

(72) Inventors:
• Tophøj, Laust
4600 Køge (DK)
• Grathwol, Nikolaj
4600 Køge (DK)

(74) Representative: Betten & Resch
Patent- und Rechtsanwälte PartGmbB
Maximiliansplatz 14
80333 München (DE)

(54) **VIBRATION DAMPER**

(57) The invention refers to a vibration damper (1000) for damping vibrations of a structure (2000), comprising:

- a first damper unit (1100) comprising a first damper body (1110) mounted to a first hanger unit (1120) that is configured to be hingedly attached to the structure (2000) by means of a first structure coupling element (2100), the first damper unit (1100) being configured as a hanging pendulum;

- a second damper unit (1200) comprising a second damper body (1210) mounted to a second hanger unit (1220) that is configured to be hingedly attached to the structure (2000) by means of a second structure coupling element (2200), the second damper unit (1200) being configured as an inverted pendulum; and

- connecting means (1300) for connecting the first damper unit (1100) and the second damper unit (1200); and

- the second structure coupling element (2200) being configured to be located at a height above the first damper body (1110).

Fig. 1A

Fig. 1B

Fig. 1C

**Description**

The present invention relates to a vibration damper for damping vibrations of a structure and to a structure comprising such a damper.

Vibrations cause a number of problems for engineering structures such as buildings and towers, including smoke-stacks and wind turbine towers. Vibrations are caused by forces from the environment, including wind forces, wave forces, aerodynamic phenomena, and earthquakes, and from human activity including footsteps and traffic. Vibrations can lead to wear, material fatigue, structural failure, and reduced comfort, and thus reduce the lifetime and/or usability of a structure.

Structure vibrations can often be mitigated cheaply and effectively by use of a vibration damper, sometimes called a Tuned Mass Damper (TMD) or a Dynamic Vibration Absorber (DVA). A vibration damper is a component added to the structure, which reduces the vibrations by absorbing the vibration energy and converting it into heat. The dampers considered here can be passive devices, i.e. with no motors or power sources, whose vibrations are tuned to resonate with the structure. Certain parameters of passive vibration dampers (such as the frequency, internal damping ratio, equilibrium position of the vibration damper) can be adjusted manually. Furthermore, the dampers considered here can also be semi-active devices, i.e. dampers that are capable of changing certain parameters (such as frequency, internal damping ratio, equilibrium position of the vibration damper) during operation automatically. In addition, the dampers considered here can also be active devices, i.e. dampers which are actively driven during operation. Such dampers (i.e. passive, semi-active and/or active dampers) work by forces, including inertial forces, acting between the mass of the damper and the structure.

A vibration damper generally comprises an oscillator and a dissipation mechanism. The oscillator can for example be a pendulum, a mass on a number of springs, a flexible beam or a mass of liquid capable of sloshing back and forth. The dissipation mechanism can for example be one or more dashpots (such as dashpots containing a viscous liuid), a material with viscoelastic properties such as e.g. bitumen whose deformation converts mechanical energy into heat, a number of parts in relative sliding motion, arranged such that friction converts mechanical energy into heat, or a mass of liquid, where drag forces and viscous forces convert mechanical energy into heat. The dissipation mechanism provides the so-called internal damping, which is the damping of the oscillator and can be measured e.g. by the so-called logarithmic decrement of the oscillator by letting the oscillator vibrate, until all the mechanical energy has been converted into heat, while the motion is recorded using e.g. an accelerometer. A vibration damper can also, more generally comprise multiple coupled oscillators, such as the TG Broadband Damper, which comprises two oscillators. In the latter case, the concept of the internal damping still applies for each oscillator.

In order to ensure effective damping, any vibration damper needs proper tuning and sufficient freedom to move (i.e. maximum damper amplitude). The term "tuning" relates to an independent adjustment of the frequency of the vibration damper to an optimal frequency with respect to the eigenfrequency of the vibration of the structure, and to an independent adjustment of the internal damping ratio of the vibration damper. Preferably, the optimal frequency of a vibration damper is close to and slightly below (e.g. by 2 — 3%) the eigenfrequency of the vibration of the structure. If either the tuning is inadequate, or the maximum damper amplitude is insufficient, the vibration damper will not be able to damp vibrations of the structure adequately.

For horizontal vibrations of tall structures, especially considering the fundamental vibration mode of the structure, the eigenfrequency can be very low, while its horizontal motion reaches large amplitudes. This is also the case for wind turbine towers, which tend to be built upon increasingly high towers. In particular, floating offshore wind turbines pose new challenges, including extremely low eigenfrequencies, and large tilt angles due to the flexibility of the foundation structure that result in large amplitude motions. Due to the low vibration frequency, the corresponding accelerations may be relatively low, but the large amplitude motions require large motions of the vibration damper in the horizontal direction. Consequently, low-frequency vibration dampers typically need to have a large maximum vibration damper amplitude.

A further problem resulting from increasingly tall structures to be damped is a static or constant tilt due to imperfections of the structure or the foundation or static loads acting on the structure. Low-frequency vibration dampers are especially sensitive to any static inclination of the structure. In particular, in the presence of a static structure tilt, the vibration damper is effectively moving about a new equilibrium position, reducing its effective maximum damper amplitude. If the static tilt becomes too great, the TMD mass may even rest on one side of the damper (an undesired position of the TMD mass where the potential energy reaches a local minimum), rendering the damper ineffective. Consequently, a low frequency damper needs an especially large maximum damper amplitude, or means for correcting the equilibrium position, so as to compensate for static structure tilts.

Vibration dampers for these cases are typically made with oscillators comprising a pendulum. A pendulum vibrates, because the geometric constraint afforded by the hangers implies an increased gravitational potential energy being associated with a sideways motion of the pendulum. The frequency of a classical pendulum can be chosen by adjusting the length $L$ of the hanger(s) holding the pendulum, with longer hangers corresponding to a lower frequency $f$ according to the classical re-

lation $f = \dfrac{1}{2\pi}\sqrt{\dfrac{g}{L}}$ , where $g$ is the acceleration due to gravity. This means that very low frequencies require very long pendulum hangers. For example, a frequency of $f = 0.10 Hz$ would require pendulum hangers of length $L = 25 m$. Hangers of such or even longer lengths are extremely impractical.

Furthermore, any real vibration damper will deviate from the idealized harmonic oscillator. In particular, the restoring force on the damper will not be a perfectly linear function of the damper excursion. Excessive non-linearities can lead to amplitude-dependent frequencies, which can be undesirable for a vibration damper. Excessive non-linearities can also lead to additional equilibrium positions of the vibration damper, which can cause the vibration damper to get stuck in an unfavorable position.

As a generic example, consider a steel tower of effective mass 100 tonnes, which tends to vibrate horizontally back and forth at a frequency of 2 Hz, known as the tower eigenfrequency, with the greatest vibration amplitude at the tower top. The vibrations can be reduced, and in some cases completely eliminated, by installing a pendulum vibration damper, comprising a 3 tonnes pendulum suspended by a couple of hangers from inside the tower near the tower top. The pendulum is tuned to an appropriate frequency close to the tower eigenfrequency. Furthermore, the pendulum motion is inhibited by a dissipation mechanism incorporated in a damping unit comprising a number of dashpots, similar to the shock absorbers in a car, which convert the kinetic energy of pendulum motion into heat.

Document DE 102011101271 A1 discloses a vibration damper for damping vibrations of a structure, comprising:

- a first damper unit comprising a first damper body mounted to a first hanger unit that is configured to be hingedly attached to the structure by means of a first structure coupling element, the first damper unit being configured as a hanging pendulum;
- a second damper unit comprising a second damper body mounted to a second hanger unit that is configured to be hingedly attached to the structure by means of a second structure coupling element, the second damper unit being configured as an inverted pendulum; and
- connecting means for connecting the first damper unit and the second damper unit.

This prior art vibration damper has very large dimensions in the vertical direction, which results in a lowered effective center of mass and an increased required space within the structure. Therefore, since the highest vibration amplitude of the structure occurs at the top of the structure, the damping efficiency of such vibration dampers decreases. Furthermore, in order to reach large vibration damper amplitudes without excessive non-linear motional behavior, the vibration damper proposed in the prior art has to be dimensioned very long in the vertical direction. This also leads to a lowered effective center of mass and an increased required space within the structure. Moreover, it is challenging to provide appropriate coupling mechanisms for coupling the damper units of the vibration damper proposed in the prior art, as such coupling mechanisms need to accommodate large relative movements of the damper units in the vertical direction, especially in case of large vibration damper amplitudes.

It is therefore an object of the invention to propose a vibration damper of the above type that allows for larger horizontal vibration amplitudes of the damper bodies while requiring less space in the vertical direction.

According to the invention this object is achieved by a vibration damper of the above type which is characterized in that the second structure coupling element is configured to be located at a height above the first damper body.

As the second structure coupling element is located above the first damper body, the required space of the vibration damper in the vertical direction is decreased. This allows for positioning the effective center of mass of the vibration damper closer to the top of the structure, where the largest vibration amplitudes of the structure occur. This increases the damping efficiency of the vibration damper. Furthermore, this allows to connect the first damper unit and the second damper unit via the connecting means such that larger horizontal vibration amplitudes of the damper bodies are possible while reducing non-linear motional behavior of the vibration damper, which further increases the damping efficiency of the vibration damper.

According to an aspect of the present invention, the second structure coupling element is furthermore configured to be located at a height below the first structure coupling element.

This further reduces the required space of the vibration damper in the vertical direction within the structure. Therefore, it is possible to locate the vibration damper even closer to the top of the tower. Consequently, the effective center of mass of the vibration damper is even closer to the top of the structure (i.e. closer to the position of the structure where the largest vibration amplitudes occur) and the damping efficiency of the vibration damper is further increased. Furthermore, this allows to connect the first damper unit and the second damper unit via the connecting means such that even larger horizontal vibration amplitudes of the damper bodies are possible while preventing non-linear motional behavior of the vibration damper, which further increases the damping efficiency of the vibration damper.

In an advantageous embodiment, the connecting means comprise a connecting bar that hingedly attaches the first hanger unit to the second hanger unit.

The connection between the first hanger unit and the second hanger unit leads to a combined movement of the first hanger unit and the second hanger unit. As the second damper unit is configured as an inverted pendulum, it only comprises an unstable equilibrium position in an undeflected position of the second damper body. The term "equilibrium position" relates to a position, in which a damper unit rests in the absence of any external forces and in the presence of only the gravitational force. Therefore, any displacement of the second damper unit results in a destabilizing effect. Due to the connection of the first hanger unit and the second hanger unit via the connecting bar, the movement of the first damper unit and the second damper unit is combined. Consequently, the destabilizing effect of the second damper unit (i.e. the inverted pendulum) lowers the frequency of the entire vibration damper. In other words, the vibration damper has a combined pendulum frequency that is lower than the frequency of each pendulum alone. This is desirable for low-frequency/high-amplitude vibration dampers. As the vibration damper frequency is lowered because of the destabilizing effect of the second damper unit, it is possible to reduce the length of the hanger units while ensuring that the vibration damper frequency is still close to the eigenfrequency of the structure. This enables for larger motions of the vibration damper in the horizontal direction, which increases the efficiency of the vibration damper. Furthermore, the attachment between the first hanger unit and the second hanger unit allows a compact design of the vibration damper and it is not necessary to directly couple the first damper body and the second damper body to each other.

In this advantageous embodiment it is furthermore preferred that in a rest position of the vibration damper the connecting bar is essentially arranged horizontally.

The arrangement of the connecting bar significantly affects the motional behavior of the vibration damper. If the communication bar is not arranged essentially horizontal in the rest position, any further rotation induced by the movement of the vibration damper will lead to significant non-linearities. An essentially horizontal arrangement of the connecting bar in a rest position of the vibration damper reduces non-linear behavior (e.g. an amplitude-dependent vibration damper frequency) of the vibration damper and thus increases the damping efficiency. The "rest position" relates to a position of the first damper unit and the second damper unit, in which the first hanger unit and the second hanger unit are oriented vertically (i.e. parallel to the effective direction of gravity). Furthermore, the maximum vibration damper amplitude significantly depends on the orientation of the connecting bar. The essentially horizontal orientation of the connecting bar allows to attach the connecting bar to the hanger units in the proximity of the structure coupling elements. This increased the maximum vibration damper amplitude of the vibration damper and thus the efficiency of the vibration damper. Moreover, rotational movement of the connecting bar during operation of the vibration damper is kept small, even at significant vibration damper amplitudes, which reduces non-linear behavior of the vibration damper. Furthermore, the formation of an undesired additional equilibrium position, in which the damper bodies may get stuck due to a local minimum of the potential energy, can effectively be prevented due to the essentially horizontal arrangement of the connecting bar.

In all embodiments using a connecting bar as described above, it is furthermore preferred that the length of the connecting bar is adjustable, preferably by means of a telescopic connecting bar mechanism.

The adjustment of the length of the connecting bar attaching the first hanger unit and the second hanger unit allows for adjusting the motional behavior of the vibration damper in order to tune the vibration damper or to reduce non-linear behavior. In the presence of a static structure tilt (e.g. an at least temporarily constant/static tilt angle of the structure due to constant load, e.g. constant wind load or long-period waves in the case of offshore wind turbine towers), the vibration damper is effectively moving about a new equilibrium position, which is different from the rest position, reducing its effective maximum damper amplitude. The adjustment of the length of the connecting bar allows for adjusting the equilibrium position of the first damper unit and the second damper unit. In other words, the equilibrium position of the vibration damper can be corrected so as to compensate for such static structure tilts or any small inherent asymmetries of the structure. Furthermore, in case a telescopic connecting bar mechanism is used, it is possible to perform these adjustments "on-site" without the need of replacing the connecting bar. The telescopic connecting bar mechanism also allows for adjusting the length of the connecting bar during operation of the vibration damper. It is therefore possible to tune the vibration damper and/or correct the equilibrium position of the vibration damper to changing static tilt angles of the structure. Consequently, the vibration damper can be adjusted efficiently and economically to changing operational conditions (e.g. changing static tilt of the structure). The length of the connecting bar can be adjusted either manually or automatically. In case the length of the connecting bar is adjustable automatically (e.g. by means of the telescopic connecting bar mechanism), the vibration damper can be considered as a semi-active vibration damper.

In all embodiments using a connecting bar as described above, it is furthermore preferred that that the connecting bar is attached to the first hanger unit to the second hanger unit at variable connecting bar attachment positions.

The adjustment of the attachment positions of the connecting bar relative to the first hanger unit and the second hanger unit allows on-site adjustments and to compensate for variations of the structure (e.g. of a floating wind turbine tower). In particular, the orientation of the connecting bar can be adjusted such that large rotational movements of the connecting bar during operation of the vibration damper are avoided, which reduces any non-linear motional behavior of the vibration damper. Furthermore, the frequency of the vibration damper can be adjusted by adjusting the connecting bar attachment positions relative to the hanger units. Consequently, this enables for proper tuning of the vibration damper. The connecting bar attachment positions can be adjusted either manually or automatically. In case the connecting bar attachment positions are adjustable/variable automatically (e.g. by an appropriate adjustment mechanism), the vibration damper can be considered as a semi-active vibration damper.

In all embodiments of the vibration damper according to the invention, it is preferred that the first hanger unit comprises at least two hangers hingedly mounted to the first damper body in such a way as to prevent tilting of the first damper body relative to the structure, and/or the second hanger unit comprises at least two hangers hingedly mounted to the second damper body in such a way as to prevent tilting of the second damper body relative to the structure.

Any off-axis motion leads to an effect called "added-mass effect", which decreases the effective damper mass and consequently the vibration damper efficiency. The effect of added-mass is caused by components of a damper unit moving at different speeds or in different directions, such as a rotational movement of the damper bodies relative to the hanger units. In particular, it is key to prevent rotational movements of the damper bodies, as part of the motional energy of the damper bodies is used for a rotation of the same, which does not contribute to the damping of the structure. By providing two hangers that are hingedly mounted to the first damper body or the second damper body, respectively, tilting (i.e. rotation) of the first damper body and the second damper body is prevented. Thereby, the effect of added-mass is significantly reduced and the efficiency of the vibration damper is increased.

In a further preferred embodiment of a vibration damper according to the invention, the first hanger unit comprises at least two hangers connected to each other and hingedly mounted to opposite sides of the first damper body, and/or the second hanger unit comprises at least two hangers connected to each other and hingedly mounted to opposite sides of the second damper body.

As a result, the respective hanger unit becomes more rigid, and any undesired torsional movement, twisting or yaw of the respective hanger unit and the respective damper body can be significantly reduced. This allows a controlled and guided movement of the first damper unit and the second damper unit within their respective movement planes. The term "movement plane" used within the present disclosure describes a plane, in which the first damper unit and the second damper unit moves during operation. As undesired off-axis motions such as twisting or yaw are prevented, the effect of added-mass is further reduced and the efficiency of the vibration damper is increased.

Advantageously the vibration damper according to the invention may further comprise means for restricting movement of the first damper unit and/or the second damper unit.

The means for restricting movement of the first damper unit and/or the second unit damper restrict movement (i.e. the vibration damper amplitude) within their movement planes. These means can restrict movement entirely, such that the damper units cannot move within their movement planes. A full restriction is desirable e.g. during transportation of the vibration damper when laying on its side, and for example during installation or service/maintenance in order to avoid a collision of the damper units with external components or humans. During the installation of the structure, so-called "Vortex Induced Vibrations (VIV)" may occur. VIV are characterized by high vibration frequencies and low amplitudes. The means for restricting movement are able to restrict movement partially as well, which allows only a restricted movement of the vibration damper with a restricted vibration damper amplitude. When the movement of the first damper unit and the second damper unit is restricted partially, the motional behavior of the vibration damper is similar to so called impact dampers, collision dampers or pounding dampers. This enables broadband damping capabilities, especially when the vibration damper is relatively heavy. Moreover, this enables highfrequency/low-amplitude broadband damping against VIV. Furthermore, this reduces the risk of complications during installation of the structure and fatigue damage to the structure and its foundation and increases safety for workers during installation.

In such an embodiment the means for restricting movement may comprise wires or chains attached to the first damper unit and/or the second damper unit and configured to be attached to the structure.

By using wires or chains as the means for restricting movement, the means for restricting movement can easily be applied to/removed from the vibration damper and the degree of restriction (in other words, the allowed vibration damper amplitude) can be easily and economically adjusted (e.g. almost full restriction or partial restriction) to the specific requirements of particular situations. Furthermore, low-cost components can be used for achieving a partial or an entire restriction of the movement of the vibration damper.

A vibration damper according to a further advantageous embodiment may furthermore comprise a shock absorber configured to be attached to the structure at a position where the movement path of the first damper body and/or the second damper body intersects the structure.

The term "movement path" describes a trajectory within the movement plane, along which the first damper body or the second damper body, respectively, are able to move during operation of the vibration damper. In the case of high vibration damper amplitudes, the shock absorber avoids an uncontrolled impact between the first damper body or the second damper body, respectively, and the structure. Thereby, the risk of damage of the damper bodies and the structure resulting from an uncontrolled impact, can be significantly reduced. Furthermore, the shock absorber allows predictable motion of the vibration damper, even at extreme vibration damper amplitudes, allowing for easier simulation and prediction of the damper effectiveness. Furthermore, the use of dedicated shock absorbers concentrate wear and damage due to impacts on standardized, exchangeable components, thus easing maintenance and life expectancy calculations.

Generally and in all embodiments, a vibration damper according to the invention may furthermore comprise a damping unit attached to the vibration damper at a variable damping unit attachment position and configured to be attached to the structure at a variable attachment position.

The damping unit allows for efficient damping of the movement of the first damper unit and the second damper unit. Generally, the damping unit acts as a dissipation mechanism, which converts kinetic energy into heat. Typical examples of the damping unit are dashpots using viscous liquid, magnetic/hysteresis (eddy current) devices or friction devices such as friction discs using coulomb friction (dry friction) or disk brakes. As the attachment position of the damping unit at the vibration damper and the attachment position of the damping unit at the structure is variable, the internal damping ratio can be adjusted, which allows tuning of the vibration damper. Furthermore, the adjustable attachment positions of the damping unit relative to the vibration damper and relative to the structure allow a compensation of minor deviations of the damping unit from a target damping rate. Such minor deviations are unavoidable in practice, so it is advantageous to be able to compensate for these deviations for an optimal damping of the first damper unit and the second damper unit. The attachment position of the damping unit at the vibration damper and the attachment position of the damping unit at the structure can be adjusted either manually or automatically. In case the attachment position of the damping unit at the vibration damper and the attachment position of the damping unit at the structure is adjustable/variable automatically (e.g. by an appropriate adjustment mechanism), the vibration damper can be considered as a semi-active vibration damper.

In still another preferred embodiment of the vibration damper according to the invention the first hanger unit and/or the second hanger unit is configured to be hingedly attached to the structure via a carrying frame.

The carrying frame allows for a compact design of the vibration damper within the structure. Furthermore, the carrying frame enables a modular design and facilitates the installation of the vibration damper within the structure, since only the carrying frame has to be aligned with and attached to the structure. In particular, this enables a compact and simple attachment interface between the vibration damper and the structure.

The invention furthermore refers to a structure, comprising 2 vibration dampers according to any of the preceding embodiments whose movement planes are oriented with respect to each other at an angle that is larger than 0° and smaller than or equal to 90°.

Each of the two vibration dampers is capable of damping vibrations of the structure occurring essentially in a direction parallel to its corresponding movement plane. By providing two vibration dampers within the structure whose movement planes are oriented at an angle larger than 0° and smaller than or equal to 90°, it is possible to damp vibrations of the structure occurring in multiple directions. If the structure vibrates in a direction that does not lie within one of the two movement planes, the vibration of the structure is still damped effectively and efficiently by a superposition of the effects of the individual vibration dampers. Furthermore, this arrangement of two vibration dampers within the structure requires less volume of the inside of the structure. Other components such as electronic components, power cables, elevators, ladders, etc. have sufficient space within the structure and may be accommodated within the structure in a safe distance from the vibration dampers.

Typically, the structure can be a wind turbine tower, a building, a building floor, a bridge, a footbridge or stairs, and wherein the first damper body and/or the second damper body can have a shape that is complementary to a shape of an adjacent portion of the structure.

The vibration damper of the present invention can be employed for damping vibrations of structures of many different kinds having different cross-sectional shapes such as circular, rectangular, trapezoidal shapes. As the shape of the first damper body and/or the second damper body is formed complementary to the shape of an adjacent portion of the structure, the damper bodies can move closer to the adjacent portion of the structure. Thereby, the maximum vibration damper amplitude is increased. This increases the efficiency of the vibration damper. In addition, the required space of the vibration damper within the structure in the horizontal direction is decreased, which allows a more compact design of the vibration damper. In other words, the available space in the horizontal direction of the structure is used efficiently. This further allows using low-cost materials for the damper bodies such as concrete, steel boxes or basins filled with concrete or sand, or other low-cost materials.

Preferred embodiments of the invention will be discussed in the following in connection with the attached figures, in which:

> Fig. 1A shows a schematic view of a vibration damper according to an embodiment of the present invention in a rest position,
>
> Fig. 1B shows a schematic view of the vibration damper of Fig. 1A in a deflected position,

Fig. 1C shows a schematic view of the vibration damper of Fig. 1A in another deflected position,

Fig. 2 shows a perspective view of the vibration damper according to another embodiment of the present invention,

Fig. 3A shows a schematic side view of the vibration damper of Fig. 2 viewed from the direction indicated by arrow A in Fig. 2,

Fig. 3B shows a schematic side view of the vibration damper of Fig. 2 viewed from the direction indicated by arrow B in Fig. 2,

Fig. 3C shows a cross-sectional top view of the vibration damper of Fig. 2 viewed from the direction indicated by arrow C in Fig. 2,

Fig. 4 shows a schematic side view of the vibration damper according to another embodiment of the present invention including a damping unit and a shock absorber,

Fig. 5 shows a schematic side view of the vibration damper according to another embodiment of the present invention including means for restricting movement, and

Fig. 6 shows a perspective view of two vibration dampers according to the present invention placed within a tower and arranged essentially in perpendicular directions.

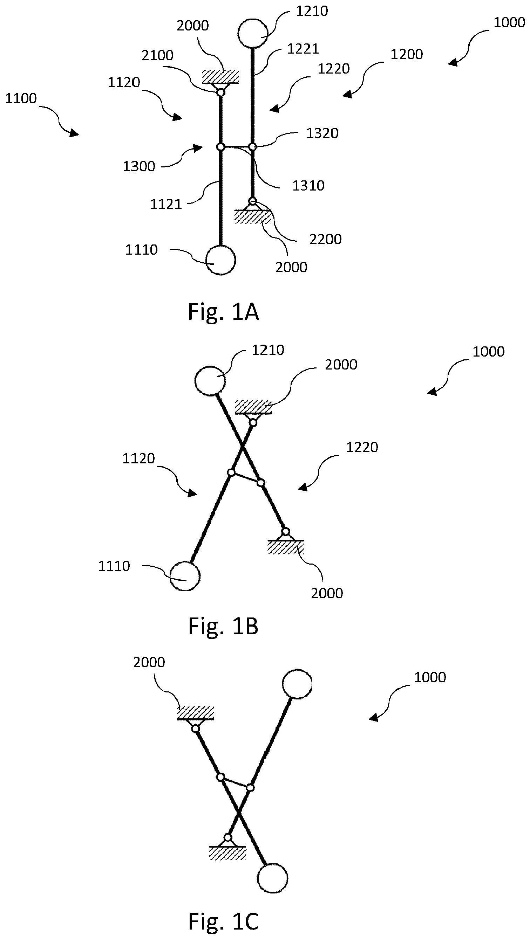

Figs. 1A, 1B and 1C show schematic views of a general vibration damper 1000 according to an embodiment of the present invention in a rest position, a position deflected to the left, and a position deflected to the right, respectively. The rest position shown in Fig. 1A represents an equilibrium position in which the vibration damper 1000 is at rest in the absence of any oscillations of a structure 2000. The vibration damper 1000 is intended to damp vibrations of the structure 2000. In Figs. 1A, 1B and 1C only parts of the walls of the structure 2000 are schematically indicated by hatched portions.

The vibration damper 1000 illustrated in Figs. 1A, 1B and 1C generally comprises a first damper unit 1100 shown on the left side and a second damper unit 1200 shown on the right side.

The first damper unit 1100 comprises a first damper body 1110 as well as a first hanger unit 1120. In the embodiment shown in Figs. 1A to 1C, the first hanger unit 1120 comprises one hanger 1121. The first damper body 1110 may e.g. be made from steel or concrete. The first damper body 1110 is mounted to the hanger 1121 of the first hanger unit 1120 that is hingedly attached to the structure 2000 by means of a first structure coupling element 2100. As can be seen in Fig. 1A, the first damper unit 1100 is configured as a hanging pendulum, i.e. the first damper body 1110 is suspended from the structure 2000 via the hanger 1121.

The second damper unit 1200 comprises a second damper body 1210 as well as a second hanger unit 1220. In the embodiment shown in Figs. 1A to 1C, the second hanger unit 1220 comprises one hanger 1221. The second damper body 1210 may e.g. be made from steel or concrete. The second damper body 1210 is mounted to the hanger 1221 of the second hanger unit 1220 that is hingedly attached to the structure 2000 by means of a second structure coupling element 2200. As can be seen in Fig. 1A, the second damper unit 1200 is configured as an inverted pendulum, i.e. the second damper body 1210 standing on the structure 2000 via the hanger 1221.

In particular, the second structure coupling element 2200 is located at a height above the first damper body 1110 and below the first structure coupling element 2100.

The vibration damper 1000 further comprises connecting means 1300 for connecting the first damper unit 1100 and the second damper unit 1200. In particular, the connecting means 1300 includes a connecting bar 1310 that hingedly connects the hanger 1121 and the hanger 1221 at connecting bar attachment positions 1320, which are illustrated as hinges in Figs. 1A to 1C. The connecting bar attachment positions 1320 between the connecting bar 1310 and the hanger 1121 and the connecting bar 1310 and the hanger 1221 can be adjustable, preferably be means of an adjustment mechanism (not shown). Thereby, it is possible to arrange the connecting bar 1310 in a substantially horizontal orientation, which reduces non-linear behavior of the vibration damper 1000 and which increases the vibration damper amplitude. This is achieved, as the connecting bar 1310 is preferably arranged in such an orientation and such a position relative to the hangers 1121, 1221, in which the movement of the connecting bar 1310, caused by movement of the first damper unit 1100 and the second damper unit 1200, is low. In particular, rotational movement or tilting of the connecting bar 1310 associated with a given displacement of the vibration damper 1000 is kept small by the arrangement of the connecting bar 1310 relative to the hangers 1121, 1221. The adjustment of the connecting bar attachment positions 1320 is an effective way of adjusting the vibration damper frequency (i.e. tuning of the vibration damper 1000) and of reducing non-linear behavior of the vibration damper 1000.

When the structure 2000 is subjected to an external load (e.g. wind force), it starts oscillating, which results in a periodically changing acceleration of the structure 2000. In particular, the structure 2000 is typically very high and the greatest vibration amplitudes occur at the top of the structure 2000. Consequently, the vibration damper 1000 should be arranged as close as possible to the top in order to damp the vibrations of the structure 2000 most effectively. As indicated above, the second structure coupling element 2200 is located at a height above the first damper body 1110 and below the first structure coupling element 2100. Accordingly, the second damper body 1210 is positioned at an increased height and the height of the center of mass of the vibration damper 1000 relative to the structure 2000 is increased. Furthermore, the required space of the vibration damper 1000 in the vertical direction is decreased. Therefore, the center of the vibration damper 1000 according to the present invention can be placed closer to the top of the structure 2000, where the maximum vibration amplitudes occur, which increases the efficiency of the vibration damper 1000.

The motional behavior of the vibration damper 1000 will now be described in more detail with reference to Figs. 1B and 1C. Due to the vibration of the structure 2000, the vibration damper 1000 is deflected from its rest position periodically, as shown in Figs. 1B and 1C.

In particular, the inertial force acting on the vibration damper 1000 leads to a deflection of the first damper unit 1100 and the second damper unit 1200. The first damper unit 1100 acting as a hanging pendulum is deflected similar to a simple hanging pendulum and the gravitational force tries to move the first damper unit 1100 back towards its rest position, i.e. to the right in Fig. 1B. This is because the rest position of the first damper unit 1100 as shown in Fig. 1A is a stable equilibrium position.

The second damper unit 1200 acting as an inverted pendulum is deflected as well but the gravitational force tries to move the second damper unit 1200 further away from its rest position, i.e. to the left in Fig. 1B. This is because the rest position of the second damper unit 1200 as shown in Fig. 1A is an unstable equilibrium position.

In other words, the first damper unit 1100 has a stabilizing effect and the second damper unit 1200 has a destabilizing effect.

However, the first damper unit 1100 and the second damper unit 1200 do not move independently from each other. The connection between the first hanger unit 1120 and the second hanger unit 1220 via the connecting bar 1310 couples their movement. This leads to a superposition of the stabilizing effect resulting from the first damper unit 1100 and of the destabilizing effect resulting from the second damper unit 1200. In general, the stabilizing effect must be greater than the destabilizing effect so that the first damper unit 1100 and the second damper unit 1200 can move towards their rest position again when being deflected and perform the required damping of the structure 2000. This is achieved, for example, by setting the mass of the first damper body 1110 to be higher than the mass of the second damper body 1210.

As a further consequence of the coupled movement, the pendulum frequencies of the first damper unit 1100 and the second damper unit 1200 are not independent from each other as well. In particular, the destabilizing effect resulting from the second damper unit 1200 lowers the pendulum frequency of the first damper unit 1100 and consequently of the vibration damper 1000.

In order to damp the vibrations of the structure 2000 effectively, the pendulum frequency of the vibration damper 1000 must be as close as possible to an optimal frequency with respect to the eigenfrequency of the structure 2000. As indicated above, the pendulum frequency of the vibration damper 1000 is mainly determined by the magnitude of the stabilizing effect resulting from the first damper unit 1100 and the destabilizing effect resulting from the second damper unit 1200. As will be described below in more detail, the overall frequency of the vibration damper 1000 can be adjusted in different ways in order to be as close as possible to an optimal frequency with respect to the vibration frequency of the structure 2000 and to damp the vibration of the structure 2000 effectively.

Furthermore, as shown in the different positions of the vibration damper 1000 in Fig. 1B and 1C, the relative movement of the connecting bar 1310 is kept low, even when the vibration damper amplitude (i.e. the displacement relative to its equilibrium position) is large. In other words, the rotational movement or tilting of the connecting bar 1310 associated with a given displacement of the vibration damper 1000 is kept small by the arrangement of the connecting bar 1310 relative to the hangers 1121, 1221. In particular, this is achieved by the essentially horizontal arrangement of the connecting bar 1310 in the rest position as shown in Fig. 1A, and by the arrangement of the first damper unit 1100 and the second damper unit 1200 as well as by the connection thereof via the connecting bar 1310 at positions of small movement (i.e. in the proximity of the structure coupling elements 2100, 2200).

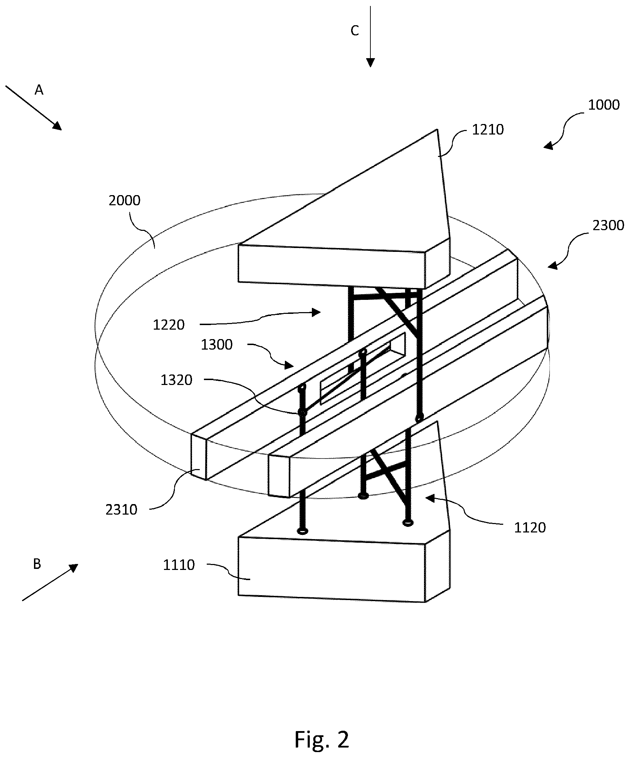

Fig. 2 shows a perspective view of the vibration damper 1000 according to another embodiment of the present invention.

The structure 2000 in this embodiment has an essentially circular cross-section. In order to attach the first damper unit 1100 and the second damper unit 1200 to the structure 2000, a carrying frame 2300 is provided. The carrying frame 2300 in this embodiment is constituted of two carriers 2310 that extend parallel to each other and that are attached to an inner circumference of the structure 2000. The two carriers 2310 extend in a direction parallel to the movement plane of the first damper unit 1100 and the second damper unit 1200.

It is noted that the carrying frame 2300 shown in Fig. 2 is not arranged centrally within the structure 2000 but is arranged offset from the center of the structure 2000. In other words, the movement plane of the vibration damper 1000 is arranged at a distance from the center of the structure 2000. Consequently, internal components (e.g. electronic components, power cables, elevators, ladders, etc.) have sufficient space within the structure 2000 and may be accommodated within the structure 2000 at a safe distance from the vibration damper 1000.

The carrying frame 2300 is attached to the structure 2000 only at the end portions of each carrier 2310. This enables a compact and simple attachment interface between the vibration damper 1000 and the structure 2000. Furthermore, this facilitates the installation of the vibration damper 1000 within the structure 2000, since only the carrying frame 2300 has to be aligned with and attached to the structure 2000.

In this embodiment, the first hanger unit 1120 comprises three hangers 1121 that are hingedly mounted to the first damper body 1110. Two of the hangers 1121 are connected to each other and are hingedly mounted to opposite sides of the first damper body 1110. The third hanger 1121 is arranged on one side of the first damper body 1110 and outside of the plane spanned by the other two hangers 1121. Similarly, the second hanger unit 1220 comprises three hangers 1221 that are hingedly mounted to the second damper body 1210. Two of the hangers 1221 are connected to each other and are hingedly mounted to opposite sides of the second damper body 1210. The third hanger 1221 is arranged on one side of the second damper body 1210 and outside of the plane spanned by the other two hangers 1221.

As shown in Fig. 2, a hanger 1121 of the first hanger unit 1120 and a hanger 1221 of the second hanger unit 1220 are connected to each other via a connecting bar 1310 at connecting bar attachment positions 1320. The connecting bar 1310 extends through an opening in one of the carriers 2310. The connecting bar attachment positions 1320 are preferably variable, i.e. they are adjustable along each hanger 1121, 1221.

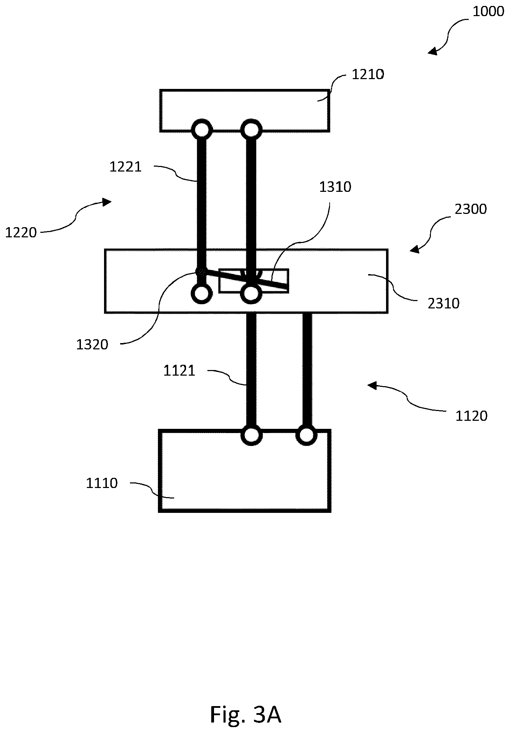

Fig. 3A shows a schematic view of the vibration damper 1000 of Fig. 2 viewed from the direction indicated by arrow A in Fig. 2.

By providing two hangers 1121, 1221 that are hingedly mounted to the first damper body 1110 or the second damper body 1210, respectively, any rotational movement of the first damper body 1110 and the second damper body 1210 is prevented when the first damper unit 1100 and the second damper unit 1200 are moving within their movement planes. Furthermore, Fig. 3A shows that the connecting bar 1310 extends through an opening in one of the carriers 2310 in order to be able to connect the hanger 1121 to the hanger 1221 via the connecting bar attachment positions 1320. In addition, connecting bar 1310 is arranged only with a small inclination relative to the structure 2000 while the vibration damper 1000 is in its equilibrium position. More preferably, the connecting bar 1310 is arranged essentially horizontal. Furthermore, it is noted that the length of the connecting bar 1310 can be adjustable by means of a telescopic connecting bar mechanism (not shown). Preferably, the connecting bar 1310 is as long as possible, which can reduce non-linear motional behavior of the vibration damper 1000.

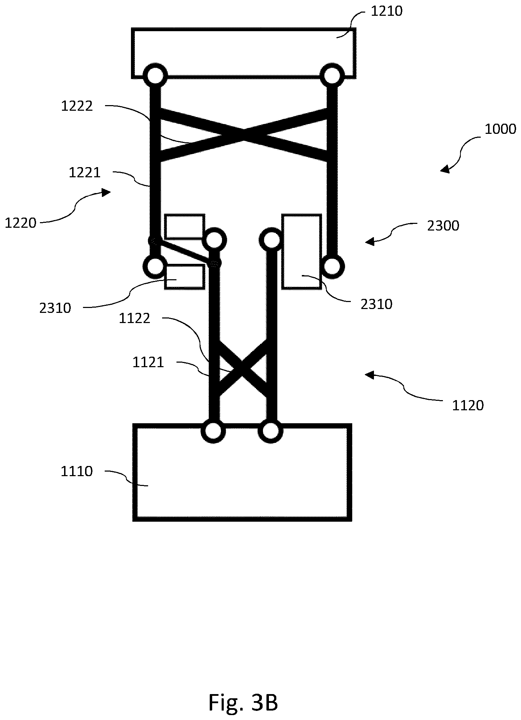

Fig. 3B shows a schematic view of the vibration damper 1000 of Fig. 2 viewed from the direction indicated by arrow B in Fig. 2.

The two hangers 1121 corresponding to the first hanger unit 1120 and the two hangers 1221 corresponding to the second hanger unit 1220 are connected to each other, respectively, by means of cross beams 1122, 1222. Furthermore, each pair of hangers 1121, 1221, shown in Fig. 3B, are hingedly attached to the carriers 2310 of the carrying frame 2300 and are hingedly mounted to opposite sides of the first damper body 1110 or the second damper body 1210.

Since two of the hangers 1121, 1221 that are arranged perpendicular to the movement plane of the first damper body 1110 or the second damper body 1210, respectively, are connected to each other by the cross beams 1122, 1222 and are hingedly mounted to opposite sides of the respective damper body 1110, 1210, the respective hanger unit 1120, 1220 becomes more rigid. This allows a controlled and guided movement of the first damper unit 1100 and the second damper unit 1210 within their respective movement planes.

Furthermore, it is noted that the length of length of the hangers 1121 of the first hanger unit 1120 and the length of the hangers 1221 of the second hanger unit 1220 can be adjustable by means of a telescopic hanger mechanism (not shown).

The adjustment of the length (or the ratio between the lengths) of the hangers 1121 and/or the hanger 1221 allows adjusting the motional behavior of the vibration damper 1000 in order to tune the vibration damper 1000 and to reduce non-linear behavior. In particular, the frequency of the vibration damper 1000 can be adjusted by adjusting the length of the hangers 1121 and/or the hanger 1221 (or the ratio thereof), such that the frequency of the vibration damper 1000 is as close as possible to the optimal frequency with respect to the eigenfrequency of the structure 2000. In addition, the equilibrium position of the first damper unit 1100 and the second damper unit 1200 can be adjusted and any small inherent asymmetries of the structure 2000 can be compensated. In case the telescopic hanger mechanism (not shown) is used for adjusting the length of the hangers 1121 and/or the hanger 1221 automatically, the vibration damper 1000 can be considered as a semi-active damper. In this case, it is further possible to perform adjustments/tuning of the vibration damper 1000 "on-site" without the need of replacing the hangers 1121 and/or the hanger 1221. Therefore, the vibration damper 1000 can be adjusted efficiently and economically to changing operational conditions. In addition, the use of a telescopic hanger mechanism facilitates performing such adjustments when the vibration damper 1000 is already installed or in use.

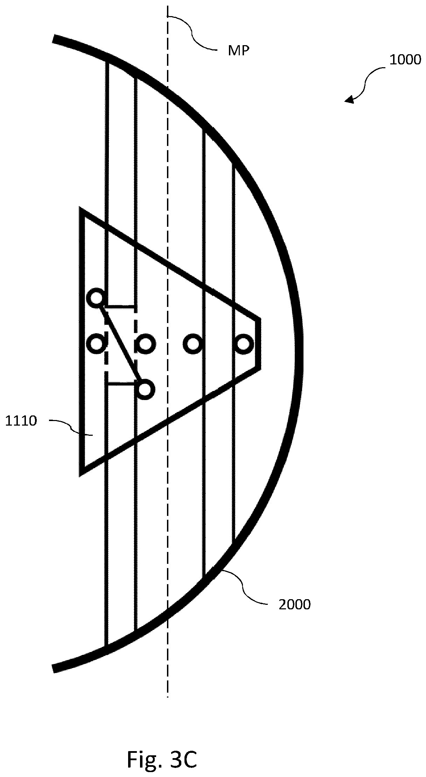

Fig. 3C shows a schematic cross-sectional top view of the vibration damper 1000 of Fig. 2 viewed from the direction indicated by arrow C in Fig. 2.

As illustrated in Fig. 3C, the first damper body 1110 has a trapezoidal shape. The second damper body 1210 may have a shape similar to the shape of the first damper body 1110 shown in Fig. 3C, but is not illustrated in the cross-sectional view of Fig. 3C. The movement plane MP of the first damper unit 1100 and the second damper unit 1200 is illustrated in Fig. 3C by a dashed line. When the first damper unit 1100 and the second damper unit 1200 are deflected from their rest position, they move within their movement planes MP and advance towards the structure 2000. In the embodiment shown in Fig. 3C, the structure 2000 has an essentially circular cross-section. The trapezoidal shape of the first damper body 1110 can therefore be considered to be complementary to the shape of an adjacent portion of the structure 2000. Thereby, the maximum vibration damper amplitude is increased. In other words, the first damper body 1110 and the second damper body 1210 can move closer to the adjacent portion of the structure 2000 without colliding with the same. It is noted that the shape of the first damper body 1110 is however not limited to a trapezoidal shape as illustrated in Fig. 3C and may have any different shape. For example, the sides of the first damper body 1110 and the second damper body 1210 facing the adjacent portion of the structure 2000 may be rounded and may have the same curvature as the adjacent portion of the structure 2000.

It is noted that in Figs. 2 to 3C, the hangers spaced apart wider from each other are considered as the hangers 1221 of the second damper unit 1200 and that the hangers spaced apart narrower to each other are considered as the hangers 1121 of the first damper unit 1100. However, it is also possible that the hangers spaced apart wider from each other are considered as the hangers of the first damper unit and that the hangers spaced apart narrower to each other are considered as the hangers of the second damper unit.

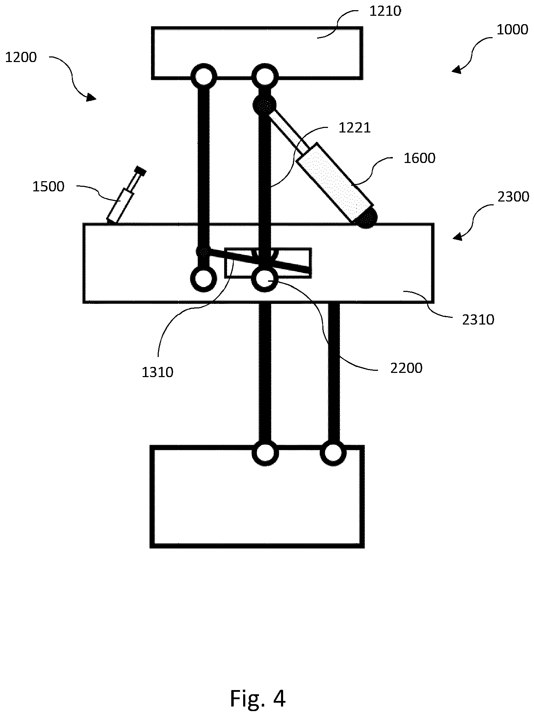

Fig. 4 shows a schematic side view of the vibration damper 1000 according to another embodiment of the present invention including a damping unit 1600 and a shock absorber 1500. Besides the shock absorber 1500 and the damping unit 1600, the vibration damper 1000 shown in Fig. 4 is similar to the vibration damper 1000 shown in Fig. 2. A description of similar components will therefore be omitted in the following.

The shock absorber 1500 shown in Fig. 4 is mounted to the carrier 2310 of the carrying frame 2300 at one end. The other end of the shock absorber 1500 is facing towards the second damper unit 1200, but is not attached to the second damper unit 1200. In other words, the shock absorber 1500 is indirectly attached to the structure 2000 via the carrying frame 2300 at a position where the movement path of the second damper body 1210 intersects the carrying frame 2300 or the structure 2000, respectively. When the second damper body 1210 moves within the movement plane during operation of the vibration damper 1000, large vibration damper amplitudes may occur. In order to prevent an uncontrolled collision between the second damper body 1210 and its periphery (such as the carrying frame 2300 or the structure 2000), the shock absorber 1500 stops the movement of the second damper unit 1200 by dissipating its motional energy into heat. In other words, the shock absorber 1500 restricts the maximum vibration damper amplitude of the second damper body 1210 such that a collision is prevented.

The damping unit shown in Fig. 4 is embodied as a dashpot 1600, which is mounted to the carrier 2310 of the carrying frame 2300 at one end. The other end of the dashpot 1600 is mounted to one of the hangers 1221 of the second hanger unit 1220. It is noted that the one end of the dashpot 1600 may also be attached to the structure 2000 directly and that the other end of the dashpot 1600 may be attached to the second damper body 1210 instead of the hanger 1221. The dashpot 1600 is adapted to damp the movement of the second damper unit 1200. Since the movement of the second damper unit 1200 is coupled to the movement of the first damper unit 1100 via the connecting bar 1310, the movement of the first damper unit 1100 is damped as well by the dashpot 1600. In particular, the dashpot 1600 allows tuning the vibration damper 1000, i.e. to adjust the internal damping ratio of the vibration damper 1000. It is noted, that the dashpot 1600 can also be arranged such that the one end is attached to a hanger 1121 of the first hanger unit 1120 and that the other end is attached to a hanger 1221 of the second hanger unit 1220.

In certain cases, it might be necessary to adjust the damping effect of the dashpot 1600 (i.e. to tune the vibration damper 1000) when the vibration damper 1000 is already installed within the structure 2000. The magnitude of the damping effect resulting from the dashpot 1600 particularly depends on the velocity at which the dashpot 1600 is compressed. As the dashpot 1600 is attached to the hanger 1221, the velocity depends on the velocity at which the attachment point between the dashpot 1600 and the hanger 1221 moves. This attachment point can be considered as a point on the hanger 1221, which moves on a curve about the second structure coupling element 2200 in a distance therefrom, which defines a radius. Consequently, considering the hanger 1221 in isolation, the velocity of a particular point on the hanger 1221 depends on the distance of this particular point to the second structure coupling element 2200. In order to exploit this effect for tuning the vibration damper 1000, the position at which the dashpot 1600 is attached to the hanger 1221 is adjustable. The point at which the damper 1600 is attached to the hanger 1221 can be moved along the hanger 1221 as necessary in order to adjust the damping effect of the dashpot 1600. Consequently, the internal damping ratio of the vibration damper 1000 can be adjusted and the vibration damper 1000 can be tuned effectively. It is preferable that the adjustment of the attachment point between the dashpot 1600 and the hanger 1221 takes place automatically by appropriate adjustment mechanisms (not shown). Furthermore, it is noted that the attachment position of the dashpot 1600 at the carrier 2310 (or at the structure 2300) is adjustable as well in order to adjust the internal damping ratio of the vibration damper 1000. It is preferable that the attachment position between the dashpot 1600 and the carrier 2310 can be adjusted automatically by appropriate adjustment mechanisms (not shown).

In Fig. 4, only one shock absorber 1500 and one dashpot 1600 that are adapted to interfere with the second damper unit 1200 are shown. However, the shock absorber 1500 and the dashpot 1600 may also be provided so as to interfere with the first damper unit 1100 or multiple shock absorbers 1500 and dashpots 1600 may be provided interfering with the first damper unit 1100 and/or the second damper unit 1200. It is further noted that it is preferable to use two or more dashpots for redundancy, so that the vibration damper 1000 is not completely undamped in the case of failure of one dashpot. Furthermore the dashpots may preferably be placed symmetrically to either side of the vibration damper 1000, so as to compensate for any asymmetry relating to the dashpots, e.g. due to differences in the effective piston cross-sections of a hydraulic dashpot. In addition, a symmetrical placement of dashpots may allow the use of one-way dashpots. One-way dashpots can have a lower cost and a longer lifetime than two-way dashpots. For a hydraulic dashpot, a longer lifetime, in particular of the outer seals, can be obtained by e.g. by using a check valve mechanism to allow easier return flow, thus avoiding overpressure under the outer seals, while also avoiding cavitation in the viscous damping fluid. The dashpots dissipate a significant amount of energy, so a design using cooling fins is preferable, e.g. with a hydraulic dashpot cylinder with the external shape a finned tube, e.g. by crimping an aluminum finned sleeve to the cylinder outside.

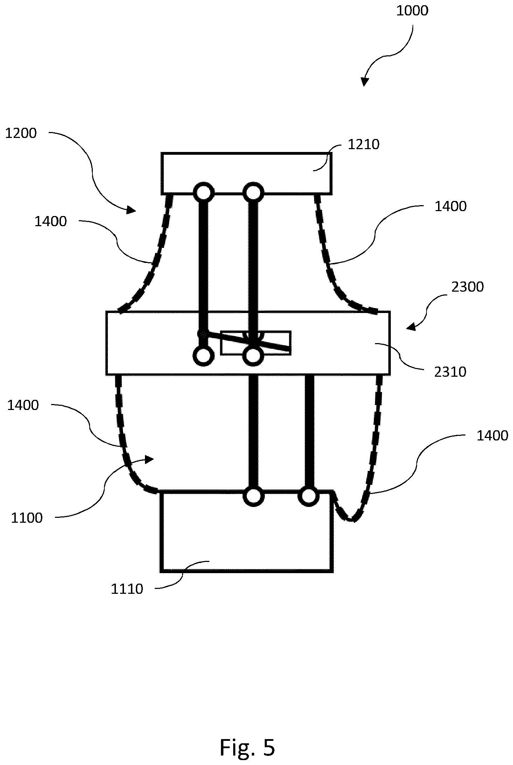

Fig. 5 shows a schematic side view of the vibration damper 1000 according to another embodiment of the present invention including means for restricting movement. Besides means for restricting movement, the vibration damper 1000 shown in Fig. 4 is similar to the vibration damper 1000 shown in Fig. 2. A description of similar components will therefore be omitted in the following.

The means for restricting movement shown in Fig. 5 are embodied as wires 1400. In Fig. 5, four wires 1400 are illustrated. Each wire 1400 is attached to a respective damper body 1110, 1210 at one end and is attached to a carrier 2310 of the carrying frame 2300 at another end. The wires 1400 are adapted to restrict movement of the first damper unit 1100 and the second damper unit 1200 within their movement planes.

The wires 1400 can restrict movement of the first damper unit 1100 and the second damper unit 1200 entirely. A complete restriction of the movement of the first damper unit 1100 and the second damper unit 1200 may be required e.g. during transportation of the vibration damper 1000 when laying on its side, and for example during installation or service/maintenance in order to avoid a collision of the damper units 1100, 1200 with external components or humans.

During the installation of the structure 2000, the vibration frequency of the structure 2000 may be relatively high and the vibration amplitude may be relatively low. In this case, the wires 1400 may restrict movement of the first damper unit 1100 and the second damper unit 1200 only partially, which allows for high-frequency/low-amplitude broadband damping against Vortex Induced Vibrations (VIV). In other words, the vibration damper 1000 acts as an impact damper. In case of, for example, a wind turbine tower, VIV may occur e.g. during installation of the wind turbine tower, between the installation of the wind turbine tower and the installation of the nacelle on top of the wind turbine tower. Thereby, the risk of complications during installation and fatigue damage to the tower and its foundation can be reduced and safety for workers can be increased.

It is noted that the one end of each wire 1400 may also be attached to the structure 2000 directly and that the other end of each wire 1400 may be attached to the respective hanger 1121, 1221 instead of the damper bodies 1110, 1210. Furthermore, it is noted that other means for restricting movement than wires may be used, such as chains, bars, or the like.

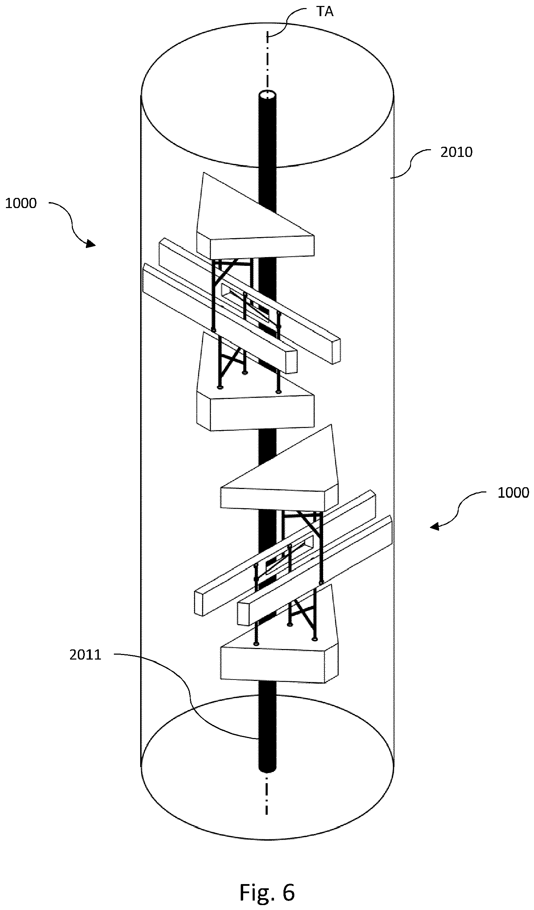

Fig. 6 shows a perspective view of two vibration dampers 1000 according to the present invention placed within a tower 2010 and arranged in perpendicular directions.

The tower 2010 shown in Fig. 6 having an essentially circular cross-section and extends in the vertical direction along a tower axis TA. Within the tower 2010, two vibration dampers 1000 are arranged above each other. Each vibration damper 1000 may be similar to, for example, the vibration damper 1000 shown for example in Fig. 2 and may comprise shock absorber(s) and/or dashpot(s) as shown for example in Fig. 4 and may also comprise means for restricting movement as shown in Fig. 5. The vibration dampers 1000 are arranged in perpendicular directions, i.e. their movement planes are oriented with respect to each other at an angle of essentially 90°. In Fig. 6, only part of the tower 2010 is shown for ease of illustration. The part shown in Fig. 6 is typically a top part of the tower 2010, where the highest vibration amplitudes occur.

The tower 2010 may vibrate (i.e. oscillate) due to forces acting on the tower 2010 in a direction perpendicular to the tower axis TA. Vibration of the tower 2010 may also occur due to forces acting on the foundation (not shown) on which the tower is standing. Such forces may occur, e.g. due to waves interfering with a floating foundation of an off-shore wind turbine or due to earth quakes or the like.

Each of the two vibration dampers 1000 is capable of damping vibrations of the tower 2010 occurring essentially within its corresponding movement plane. In other words, each vibration damper 1000 is most effective in damping vibrations in the case, in which the vibration direction of the tower 2010 is essentially parallel to the movement plane of the vibration damper 1000. However, the direction of the vibration of the tower 2010 is typically not constant and may vary depending on the forces acting on the tower 2010 or the foundation thereof.

As the two vibration dampers 1000 are provided within the tower 2010 whose movement planes are oriented with respect to each other at an angle of essentially 90°, it is possible to damp vibrations of the tower 2010 occurring in different directions. If the tower 2010 vibrates in a direction that does not lie within one of the two movement planes, the vibration of the tower 2010 is still damped effectively and efficiently by a superposition of the effects of the two individual vibration dampers 1000. Furthermore, this arrangement of the two vibration dampers 1000 within the tower 2010 requires less volume of the inside of the structure compared to a single damper, which must act in all horizontal directions. As the vibration dampers 1000 require less space in the vertical direction, both vibration dampers 1000 can be placed closer to the top of the tower 2010, which increases to overall efficiency of the vibration dampers 1000. It is noted that the carrying frames of the two vibration dampers 1000 shown in Fig. 6 are not arranged centrally within the tower 2010. In other words, the movement planes of the two vibration dampers 1000 are arranged at a distance from the tower axis TA. Consequently, internal components 2011 (e.g. electronic components, power cables, elevators, ladders, etc.) have sufficient space within the tower 2010 and may be accommodated within the tower 2010 at a safe distance from the vibration dampers 1000. In Fig. 6, a power cable is illustrated as an example for such internal components 2011, which extends along the tower axis TA in a distance from both vibration dampers 1000. It is noted that the internal components 2011 may include other components additionally or alternatively.

It is noted that the two vibration dampers 1000 may be oriented with respect to each other at an angle different from 90°, in particular at an angle between 0° and 90°.

Furthermore, it is noted that the carrying frame 2310 may support auxiliary components such as a personnel safety cage preventing unwanted access to the damper space, as well as access platforms and ladders.

Exemplary parameters and measurements of a tower 2010 and of vibration dampers 1000 are given next:

- Height of the tower: 170m.
- Tower modal mass measured at the tower top: 1200t.
- Center of the upper vibration damper: 8m below the tower top.
- Center of the lower vibration damper: 18m below the tower top.
- Vibration frequency of the tower: 0,07 - 0,3 Hz
- Vibration amplitude of the tower: 3m
- Tower diameter: 8m
- Mass of the first damper body: 15t.
- Mass of the second damper body: 10t.
- Length of the hangers of the vibration damper: 4m.
- Height of the vibration damper cage: 10m
- Length of the connecting bar 3m
- Distance between the attachment point of the connecting bar to the first structure coupling element: 1m
- Distance between the attachment point of the connecting bar to the second structure coupling element: 1m

In the above described embodiments, cases were considered in which the vibration damper is a passive or a semi-active vibration damper, i.e. certain parameters of the vibration damper (such as the frequency, internal damping ratio, equilibrium position of the vibration damper) are adjustable either manually or automatically. However, the vibration damper according to the present invention may also be an active vibration damper. In this case, the movement of the first damper unit and of the second damper unit is driven by driving means such as motors or other actuators. Furthermore, an active vibration damper may additionally be capable of changing certain parameters (such as frequency, internal damping ratio, equilibrium position) during operation, as described above.

Furthermore, in the case of any of the above described embodiments including semi-active or active vibration dampers, controlling means may be provided for configuring the vibration damper by controlling one or more of: the length of the connecting bar, the connecting bar attachment positions, the length of the hangers, the damping unit attachment position, and driving of the first damper unit and driving of the second damper unit. The controlling means may include sensors such accelerometers, e.g. a computer or a PID controller and/or other suitable means for controlling the semi-active and/or active vibration damper.

**Claims**

1. A vibration damper (1000) for damping vibrations of a structure (2000), comprising:

   - a first damper unit (1100) comprising a first damper body (1110) mounted to a first hanger unit (1120) that is configured to be hingedly attached to the structure (2000) by means of a first structure coupling element (2100), the first damper unit (1100) being configured as a hanging pendulum;
   - a second damper unit (1200) comprising a second damper body (1210) mounted to a second hanger unit (1220) that is configured to be hingedly attached to the structure (2000) by means of a second structure coupling element (2200), the second damper unit (1200) being configured as an inverted pendulum; and
   - connecting means (1300) for connecting the first damper unit (1100) and the second damper unit (1200);
   **characterized in that**
   the second structure coupling element (2200) is configured to be located at a height above the first damper body (1110).

2. A vibration damper (1000) according to claim 1, **characterized in that** the second structure coupling element (2200) is furthermore configured to be located at a height below the first structure coupling element (2100).

3. A vibration damper (1000) according to any of the preceding claims, **characterized in that** the connecting means (1300) comprise a connecting bar (1310) that hingedly attaches the first hanger unit (1120) to the second hanger unit (1220).

4. A vibration damper (1000) according to the preceding claim, **characterized in that** in a rest position of the vibration damper (1000) the connecting bar (1310) is essentially arranged horizontally.

5. A vibration damper (1000) according to claim 3 or 4, **characterized in that** the length of the connecting bar (1310) is adjustable, preferably by means of a telescopic connecting bar mechanism.

6. A vibration damper (1000) according to any one of claims 3 to 5, **characterized in that** the connecting bar (1310) is attached to the first hanger unit (1120) and to the second hanger unit (1220) at variable connecting bar attachment positions (1320).

7. A vibration damper (1000) according to any of the preceding claims, **characterized in that** the first hanger unit (1120) comprises at least two hangers (1121) hingedly mounted to the first damper body (1110) in such a way as to prevent tilting of the first damper body (1110) relative to the structure (2000), and/or the second hanger unit (1220) comprises at least two hangers (1221) hingedly mounted to the second damper body (1210) in such a way as to prevent tilting of the second damper body (1210) relative to the structure (2000).

8. A vibration damper (1000) according to any of the preceding claims, **characterized in that** the first hanger unit (1120) comprises at least two hangers (1121) connected to each other and hingedly mounted to opposite sides of the first damper body (1110), and/or the second hanger unit (1220) comprises at least two hangers (1221) connected to each other and hingedly mounted to opposite sides of the second damper body (1210).

9. A vibration damper (1000) according to any of the preceding claims, **characterized by** further comprising means for restricting movement (1400) of the first damper unit (1100) and/or the second damper unit (1200).

10. A vibration damper (1000) according to the preceding claim, **characterized in that** the means for restricting movement (1400) comprise wires or chains attached to the first damper unit (1100) and/or the second damper unit (1200) and configured to be attached to the structure (2000).

11. A vibration damper (1000) according to any of the preceding claims, **characterized by** furthermore comprising a shock absorber (1500) configured to be attached to the structure (2000) at a position where the movement path of the first damper body (1110) and/or the second damper body (1210) intersects the structure (2000).

12. A vibration damper (1000) according to any of the preceding claims, **characterized by** furthermore comprising a damping unit (1600) attached to the vibration damper (1000) at a variable damping unit attachment position and configured to be attached to the structure (2000) at a variable attachment position.

13. A vibration damper (1000) according to any of the preceding claims, **characterized in that** the first hanger unit (1120) and/or the second hanger unit (1220) is configured to be hingedly attached to the structure (2000) via a carrying frame (2300).

14. A structure (2000) comprising 2 vibration dampers (1000) according to any of the preceding claims whose movement planes are oriented with respect to each other at an angle that is larger than 0° and smaller than or equal to 90°.

15. A structure (2000) according to the preceding claim, wherein the structure (2000) is a wind turbine tower, a building, a building floor, a bridge, a footbridge or stairs, and wherein the first damper body (1110) and/or the second damper body (1210) has a shape that is complementary to a shape of an adjacent portion of the structure (2000).

Fig. 1A

Fig. 1B

Fig. 1C

Fig. 2

Fig. 3A

Fig. 3B

Fig. 3C

Fig. 4

Fig. 5

Fig. 6

# EUROPEAN SEARCH REPORT

Application Number

EP 21 19 4434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 853 197 A1 (AERPAC UK LTD [GB]) 15 July 1998 (1998-07-15) | 1,2,9, 13-15 | INV. F16F7/10 |
| A | * figures 1, 3-5 * | 3-8, 10-12 | E04H9/02 E04B1/98 |
| X | JP H10 73143 A (NISHIHARA OSAMU; TOKKYO KIKI KK) 17 March 1998 (1998-03-17) | 1-3,9, 10,14,15 | |
| Y | * figures 15, 16 * * paragraph [0002] * | 7,8,11, 12 | |
| A | | 4-6,13 | |
| X | JP H06 56536 U (UNKNOWN) 5 August 1994 (1994-08-05) | 1,13-15 | |
| A | * figure 1 * * paragraph [0002] * | 2-12 | |
| Y | JP 2011 012745 A (OHBAYASHI CORP) 20 January 2011 (2011-01-20) | 7,8,11, 12 | |
| A | * claim 1; figures 1-4 * | 1 | |

TECHNICAL FIELDS SEARCHED (IPC)

F16F
E04H
E04B

The present search report has been drawn up for all claims

| Place of search | Date of completion of the search | Examiner |
|---|---|---|
| The Hague | 3 March 2022 | Huyge, Kevin |

**EP 4 145 012 A1**

## ANNEX TO THE EUROPEAN SEARCH REPORT
## ON EUROPEAN PATENT APPLICATION NO.

EP 21 19 4434

03-03-2022

| Patent document cited in search report | | Publication date | Patent family member(s) | | Publication date |
|---|---|---|---|---|---|
| EP 0853197 | A1 | 15-07-1998 | EP | 0853197 A1 | 15-07-1998 |
| | | | NL | 1005000 C2 | 15-07-1998 |
| JP H1073143 | A | 17-03-1998 | JP | 4031072 B2 | 09-01-2008 |
| | | | JP | H1073143 A | 17-03-1998 |
| JP H0656536 | U | 05-08-1994 | NONE | | |
| JP 2011012745 | A | 20-01-2011 | JP | 5423182 B2 | 19-02-2014 |
| | | | JP | 2011012745 A | 20-01-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011101271 A1